(19) **Europäisches Patentamt**

**European Patent Office**

**Office européen des brevets**

(11) Veröffentlichungsnummer: **0 258 620 B1**

(12) **EUROPÄISCHE PATENTSCHRIFT**

(45) Veröffentlichungstag der Patentschrift: **06.05.92**

(51) Int. Cl.⁵: **B62D 7/20**

(21) Anmeldenummer: **87110835.3**

(22) Anmeldetag: **24.07.87**

(54) Haltering für einen Dichtungsbalg auf der Spurstange von Kraftfahrzeugen.

(30) Priorität: **05.09.86 DE 3630337**

(43) Veröffentlichungstag der Anmeldung:
**09.03.88 Patentblatt 88/10**

(45) Bekanntmachung des Hinweises auf die
Patenterteilung:
**06.05.92 Patentblatt 92/19**

(84) Benannte Vertragsstaaten:
**ES GB IT SE**

(56) Entgegenhaltungen:
EP-A- 0 071 587      DE-A- 1 098 381
DE-A- 2 402 491      FR-A- 2 465 934
GB-A- 1 000 622      GB-A- 2 077 882
US-A- 3 035 297      US-A- 4 103 385

PATENT ABSTRACTS OF JAPAN, Band 9, Nr.
261 (M-422)[1984], 18. Oktober 1985; & JP-
A-60 109 667 (TOYODA GOSEI K.K.)
15-06-1985

(73) Patentinhaber: **LEMFOERDER METALLWAREN
AG.**
**Postfach 1220**
**W-2844 Lemförde(DE)**

(72) Erfinder: **Buhl, Reinhard**
**Eichendorffstrasse 9**
**W-4508 Bohmte(DE)**

(74) Vertreter: **Bruse, Willy Hans Heinrich**
**Edisonstrasse 14**
**W-2800 Bremen 33(DE)**

**Beschreibung**

Die Erfindung betrifft die Ausbildung des Halteringes für einen Dichtungsbalg auf der Spurstange von Kraftfahrzeugen, welcher die Gattungsmerkmale nach dem Oberbegriff des Patentanspruches 1 aufweist. Ein derartiger Haltering ist beispielsweise aus der Patentschrift DE-A-2 402 491 bekannt.

Solche Halteringe werden von der Spurstange durchsetzt und durch meistens umlaufende, ineinandergreifende Ausnehmungen und Vorsprünge gegen axiale Verschiebung gesichert. Die Befestigung des Dichtungsbalges erfolgt durch einen Federring in einer Umfangsrille des Halteringes. Bei der Längenverstellung von Spurstangen kommt es zu einer Verdrehung der Spurstange gegenüber dem Faltenbalg. Dabei besteht die Gefahr, daß der Faltenbalg verzwirbelt wird, weil der Haltering auf der Spurstange nur unter Kraftaufwendung verdrehbar ist. Bei einem solchermaßen verzwirbelten Faltenbalg ist dessen einwandfreie Funktion jedoch nicht mehr gewährleistet. Abhilfe erreicht man nach dem Stande der Technik dadurch, daß der Haltering nur mit äußerst geringer radialer Vorspannung auf seinen Sitz auf der Spurstange aufgeschoben wird oder durch ein Spezialfett, welches zwischen die sich berührenden Oberflächen des Halteringes und der Spurstange bzw. dem Zapfenende des durch den Faltenbalg zu schützenden Kugelgelenks eingebracht wird, um auf diese Weise die Reibung zwischen beiden Teilen zu reduzieren, bzw. durch eine Kombination der beiden genannten Maßnahmen. Das Spezialfett darf aber unter keinen Umständen mit dem Spezialfett der Zahnstange der Lenkung in Berührung kommen. Die Anordnung mit geringerer Vorspannung stellt hohe Anforderungen an die Maßhaltigkeit und verteuert daher die Herstellung entsprechend.

Es ist Aufgabe der Erfindung, den Sitz des Halteringes auf der Spurstange unter Aufrechterhaltung seiner Dichtungswirkung möglichst reibungsarm zu gestalten.

Diese Aufgabe wird erfindungsgemäß durch die Merkmale nach dem Kennzeichen des Patentanspruches 1 gelöst.

Die härtere und geglättete Molekularstruktur der Oberfläche des Halteringes wenigstens in dem die Spurstange berührenden Bereich gegenüber der übrigen Molekularstruktur verringert den Reibwert zwischen beiden Teilen erheblich, so daß der Haltering ohne Einbuße an Dichtigkeit und ohne Verwendung eines Spezialfetts leicht auf der Spurstange drehbar ist. Die zur Drehung erforderlichen Kräfte sind sehr viel geringer als die bei Verzwirbelung des Dichtungsringes sich aufbauenden Materialspannungen, so daß der Faltenbalg stets frei von Materialspannungen ist und sich solche Spannungen auch nicht unbemerkt bei der Spurstangeneinstellung aufbauen können.

Einen besonderen Erfindungsgedanken enthält der Patentanspruch 2. Die hiernach erzielte Änderung der Oberflächenstruktur des Ringes durch Chlorieren ist besonders einfach durchzuführen und hat einen größtmöglichen Effekt, wie Versuche gezeigt haben. Aus Gründen größerer Wirtschaftlichkeit kann die Chlorierung auf der gesamten Oberfläche des Ringes erfolgen, weil diese für die Elastizität des Halteringes an sich ohne erkennbaren Einfluß bleibt. Durch die zeitliche Dauer der Chlorierung, in einfachster Form durch Eintauchen in eine flüssige Substanz, kann auch der sich einstellende Härtegrad an der Oberfläche des Halteringes variiert werden.

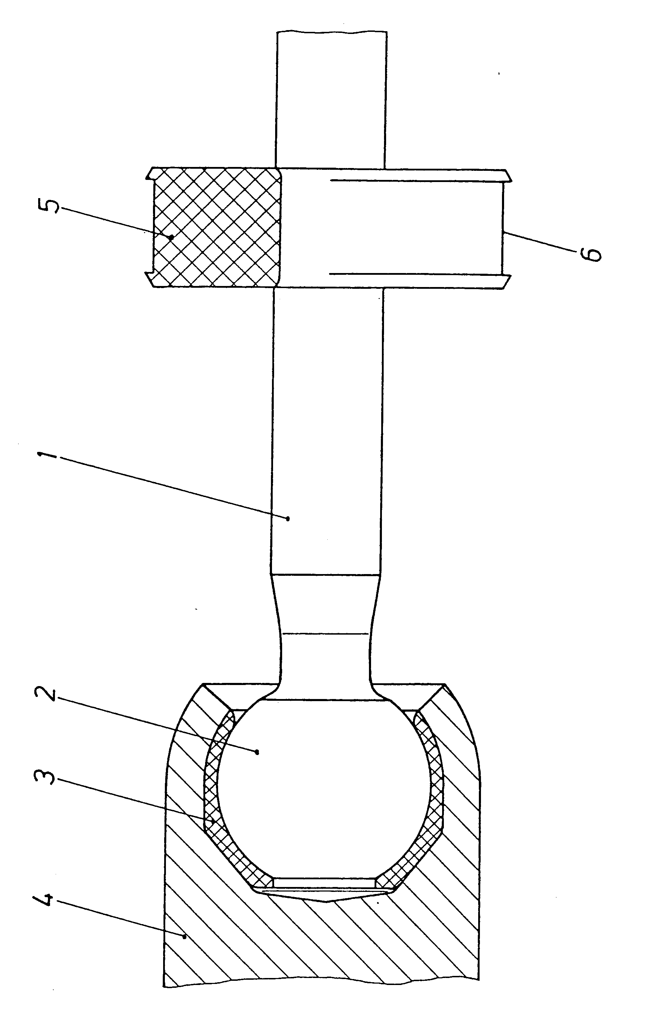

Auf der Zeichnung ist ein Ausführungsbeispiel eines Halteringes mit Merkmalen nach der Erfindung dargestellt.

Das Beispiel zeigt ein Kugelgelenk mit einer an dem einen Ende eines Gelenkzapfens 1 befestigten Gelenkkugel 2, die mittels einer Gelenkschale 3 aus Kunststoff in einem Gehäuse 4 gelagert ist. Auf dem Gelenkzapfen 1 ist der Haltering 5 axial unverschieblich angeordnet. Die dazu dienenden konstruktiven Mittel sind auf der Zeichnung nicht dargestellt. Der Faltenbalg wird in der Umfangsausnehmung 6 mittels eines Federringes oder dergleichen befestigt. Wenigstens die den Gelenkzapfen 1 berührende Oberfläche der inneren Ausnehmung des Halteringes 5 ist in der Molekularstruktur gegenüber der übrigen Molekularstruktur des Ringes gehärtet und dadurch geglättet. Diese Änderung der Molekularstruktur wird erfindungsgemäß durch Chlorieren erreicht. Dabei kann der Haltering 5 in eine zum Chlorieren geeignete Substanz eingetaucht werden und darin eine bestimmte Zeit verweilen, bis der gewünschte Härtegrad und die gewünschte Glätte an der Oberfläche des Halteringes erreicht ist. Bei diesem Verfahren zur Verwirklichung des Erfindungsgedankens wird zwar die gesamte Oberfläche des Halteringes chloriert, jedoch ist dies ohne erkennbaren Einfluß auf die Elastizität des Halteringes. Der gewünschte Effekt nach der Erfindung kann aber auch auf andere Weise erreicht werden, zum Beispiel durch Besprühen, temporäres Beschichten oder in anderer Weise.

**Patentansprüche**

1. Haltering für einen Dichtungsbalg auf der Spurstange von Kraftfahrzeugen, welcher aus Gummi oder aus einem anderen Werkstoff mit vergleichbaren Eigenschaften besteht, und auf der gegenüber dem Haltering verdrehbaren Spurstange mit einer Sicherung gegen axiale Verschiebung aufgesetzt ist, dadurch gekennzeichnet, daß der Haltering (5) mit einem geringen Reibungsbeiwert leicht drehbar auf der Spurstange (1) angeordnet ist und seine die Spurstange (1) berührende Oberfläche eine gehärtete, geglättete Molekularstruktur aufweist.

2. Haltering nach Anspruch 1, dadurch gekennzeichnet, daß die Oberfläche des Halteringes (5) durch Chlorieren gehärtet ist.

## Claims

1. Retaining ring for a sealing bellows on the track rod of motor vehicles which consists of rubber or another material with comparable properties and is mounted on the track rod, which can rotate with respect to the retaining ring, while being secured against axial displacement, characterised in that the retaining ring (5) is arranged such that it can easily rotate on the track rod (1) with a small coefficient of friction and its surface which contacts the track rod (1) has a hardened, smoothed molecular structure.

2. Retaining ring according to claim 1, characterised in that the surface of the retaining ring (5) is hardened by chlorination.

## Revendications

1. Anneau de retenue pour un soufflet d'étanchéité d'une barre d'accouplement de véhicules automobiles, l'anneau de retenue étant réalisé en caoutchouc ou en un autre matériau présentant des propriétés comparables et étant monté de manière bloquée en décalage axial sur la barre d'accouplement qui est rotative par rapport à l'anneau de retenue, caractérisé en ce que l'anneau de retenue (5) peut facilement tourner sur la bielle de connexion (1), avec un faible coefficient de frottement, et présente une structure moléculaire durcie et lissé sur sa surface en contact avec la bielle de connexion (1).

2. Anneau de retenue selon la revendication 1, caractérisé en ce que la surface de l'anneau de retenue (5) est durcie par traitement au chlore.